Europäisches Patentamt

European Patent Office

Office européen des brevets

(19)

(11) Numéro de publication: **0 046 160**
A1

(12) **DEMANDE DE BREVET EUROPEEN**

(21) Numéro de dépôt: 80401199.7

(22) Date de dépôt: 20.08.80

(51) Int. Cl.³: **F 16 L  47/00,** F 28 F  9/06, F 24 J  3/02, F 16 L  47/02

(43) Date de publication de la demande: 24.02.82
Bulletin 82/8

(84) Etats contractants désignés: BE CH DE FR GB IT LI NL

(71) Demandeur: **Toupin, Joseph François, 28 Rue du Pré,
F-72300 Sablé (FR)**

(72) Inventeur: **Toupin, Joseph François, 28 Rue du Pré,
F-72300 Sablé (FR)**

(74) Mandataire: **Phélip, Bruno et al, c/o Cabinet Harlé &
Phélip 21, rue de La Rochefoucauld, F-75009 Paris (FR)**

(54) Procédé d'obturation ou de raccordement d'un profilé multitubulaire et l'application du procédé à la construction d'un échangeur.

(57) Après avoir arasé les cloisons intérieures (4) de l'extrémité d'un profilé (1), on place celui-ci entre une pièce interne (6) et une pièce externe (7) en forme d'entonnoir à section rectangulaire, qu'on serre l'une contre l'autre par des vis (16). L'extrémité de la pièce interne (6) est raccordée à un tube cylindrique (2) dont l'axe est perpendiculaire à l'axe du profilé (1). Dans une variante la pièce interne consiste en un tube intérieur (30) et la pièce externe consiste en un tube (20) comportant une fente longitudinale (21).

De préférence, l'extrémité du profilé (1) est au préalable conformée par déformation permanente. Avantageusement, les cloisons terminales (5) du profilé (1) ont une surépaisseur.

Application à la construction d'échangeurs, de capteurs solaires, de filtres, etc., utilisant lesdits profilés.

La présente invention est relative à un procédé pour raccorder une pièce multitubulaire obtenue par extrusion avec une autre pièce analogue ou avec un collecteur. Dans de nombreuses techniques, et notamment celles d'échange de chaleur, on utilise des faisceaux de tubes parallèles, jointifs ou non, parcourus par un fluide, et, habituellement, on prépare ces tubes un à un et on les relie, à l'aide de joints démontables ou non, entre eux ou à un collecteur. Le prix des tubes de petit diamètre est élevé quand on le rapporte à leur section, et leur raccordement est compliqué.

On sait produire par extrusion des pièces multitubulaires dont l'aspect est celui de deux surfaces planes parallèles reliées entre elles par une série de cloisons parallèles entre elles et généralement perpendiculaires auxdites surfaces. L'ensemble constitue une série de tubes parallèles, à section sensiblement carrée ou rectangulaire.

Il serait tentant d'utiliser de telles pièces qui sont faciles à obtenir à un prix peu élevé, et qui sont d'une solidité supérieure à celle d'un faisceau de petits tubes de section analogue, mais le problème de leur jonction n'a pas été jusqu'ici résolu de façon satisfaisante : il n'existe pas de joints démontables efficaces, et même les joints non démontables, tels que les joints soudés, sont d'obtention délicate à cause de la minceur des parois et exigent des opérateurs spécialement entraînés.

Le besoin se fait donc sentir d'un procédé qui permette de raccorder une pièce multitubulaire à une une autre pièce pour obtenir un joint ayant une grande robustesse et une excellente étanchéité, ce procédé pouvant être mis en oeuvre sans faire appel à du personnel hautement spécialisé.

La présente invention a donc pour but de fournir un joint permettant soit d'obturer l'extrémité d'une pièce multitubulaire, soit de raccorder une extrémité d'une telle pièce avec un objet creux quelconque qui peut être soit une autre pièce multitubulaire soit un tube collecteur.

L'invention fournit un procédé du type dans lequel l'étanchéité est obtenue en plaçant l'extrémité d'un tube déformable entre deux pièces rigides extérieures et intérieures, de formes conjuguées, et en rapprochant ces deux pièces pour serrer entre elles l'extrémité du tube. Les procédés de ce type sont connus en soi et donnent de bons résultats pour des tubes à section circulaire, dont on serre l'extrémité entre deux pièces tronconiques, qui serrent l'extrémité du tube tout en lui donnant une forme évasée par augmentation de son diamètre à l'extrémité, la déformation pouvant se faire soit dans le domaine élastique soit dans celui de la déformation permanente. Ce type de procédé n'a pas, jusqu'ici été appliqué à des tubes de section rectangulaire aplatie car on se heurte alors à la difficulté suivante : si l'on donne aux pièces qui enserrent l'extrémité une conicité, c'est-à-dire une pente par rapport à la direction générale du tube, uniforme, le petit côté de la section terminale du tube subit un allongement relatif qui est supérieur à celui du grand côté, le rapport des allongements relatifs étant l'inverse du rapport des longueurs du petit et du grand côté. Cela veut dire que, pour un profilé dont le grand côté est par exemple 20/plus grand que le petit côté, ou plus, il est presqu'impossible d'éviter, sur les petits côtés, des amincissements exagérés et/ou des ruptures. La conicité ne peut cependant varier que dans des limites assez étroites si l'on veut obtenir une liaison convenablement étanche. L'idée qui est au départ de l'invention est de constituer aux extrémités une "réserve de matière" qui évite les amincissements exagérés ou les ruptures.

L'invention fournit donc un procédé d'obturation ou de raccordement d'un profilé multitubulaire comportant deux parois planes parallèles reliées par des cloisons longitudinales parallèles entre elles et délimitant avec les parois une série de tubes, à section carrée ou rectangulaire, ce procédé étant du type dans lequel l'étanchéité est obtenue en plaçant l'extrémité d'un tube déformable entre deux pièces rigides extérieure et intérieure, de forme conjuguées et en rapprochant ces deux pièces l'une de l'autre pour serrer l'extrémité du tube.

Ce procédé présentant la particularité qu'on utilise un profilé dont les cloisons terminales ont une épaisseur initiale supérieure à celle des parois et calculée pour qu'après les déformations correspondant à la mise en oeuvre du procédé, cette épaisseur soit à peu près égale à celle des parois.

De préférence on évase l'extrémité du profilé avant le serrage par une déformation permanente et par cette déformation permanente, on conforme le profilé à la surface extérieure de la pièce intérieure.

Suivant une forme d'exécution avantageuse, les cloisons terminales ont la forme de demi-cylindres à concavité tournée vers l'intérieur.

Cependant, suivant une autre forme d'exécution, on utilise un profilé qui comporte, à intervalles réguliers, des cloisons intermédiaires qui ont l'épaisseur prévue pour les cloisons terminales. On peut ainsi, avec une même filière d'extrusion, obtenir toute une série de profilés dont la largeur varie par échelons, soit par obturation partielle de la filière, soit par découpage ultérieur. On peut prévoir que les cloisons intermédiaires ainsi transformables en cloisons terminales ont une forme rectangulaires, moins satisfaisante techniquement qu'une forme arrondie et doivent donc être plus épaisses. Cette disposition est plus avantageuse au point de vue économique.

Suivant un mode préféré de mise en oeuvre du procédé de l'invention après avoir arasé les cloisons du profilé sur une certaine longueur à partir de l'extrémité, en laissant substitué toutefois les cloisons extrêmes, on introduit ladite extrêmité dans une pièce extérieure constituée d'un tube en la faisant passer dans une fente longitudinale dudit tube, puis on introduit dans ledit tube une pièce intérieure cylindrique de section extérieure légérement inférieure à la section intérieure du tube, l'écart entre ces deux sections étant tel que les parois du profilé sont fortement serrées entre le tube et la pièce.

Dans ce mode de mise en oeuvre, on peut prévoir que la pièce cylindrique est un tube comportant une série d'orifices situés à peu près sur une même génératrice, et on place ladite pièce avec les orifices dirigés vers l'intérieur du profilé multitubulaire. Dans ce cas, la pièce intérieure constitue un collecteur d'alimentation ou d'évacuation pour le profilé multitubulaire. Il est avantageux aussi de prévoir que la pièce cylindrique est un tube fendu suivant une génératrice, et on place ladite pièce avec la fente dirigée à l'opposé du profilé multitubulaire. On peut ainsi jouer sur les déformations de la pièce intérieure pour faciliter la mise en oeuvre du procédé suivant un autre mode de mise en oeuvre du procédé après avoir arasé les cloisons sur une certaine longueur à partir de l'extrémité, on introduit l'extrémité du profilé à l'intérieur d'une pièce extérieure comportant une embase et une partie centrale tubulaire à section allongée, dont la section diminue en s'écartant de l'embase jusqu'à être légérement supérieure à celle du profilé, et on introduit entre les parois du profilé une pièce intérieure.

Quel que soit le mode de mise en oeuvre, on obtient un joint plus étanche et plus solide lorsqu'on place entre la pièce extérieure et la pièce intérieure, au moins de chaque côté de l'extrémité du profilé, une matière d'étanchéité durcissable et qu'on déforme élastiquement la pièce intérieure pour la serrer contre la pièce extérieure ou vice-versa pendant le durcissement de ladite matière d'étanchéité. L'emploi d'une pièce intérieure en forme de tube fendu est évidemment un moyen pratique pour obtenir une telle déformation plastique. Il convient cependant de noter que pour l'emploi d'une matière d'étanchéité durcissable, on renonce le plus souvent à avoir un joint démontable.

Pour empêcher plus efficacement les déplacements relatifs du profilé multitubulaire par rapport aux pièces sous l'effet de sollicitations mécaniques dues, par exemple à des variations de pression, on peut pratiquer des trous dans la partie de la paroi du profilé qui est destinée à être serrée entre les pièces extérieure et intérieure, si bien que l'immobilisation du profilé est améliorée par pénétration de la matière d'étanchéité dans ces trous, ainsi que la liaison des pièces entre elles. Si l'on désire empêcher plus efficacement les déplacements relatifs du profilé par rapport aux pièces sans renoncer à avoir un joint démontable, on peut prévoir des stries longitudinales sur la face interne de la pièce extérieure et/ou sur la face externe de la pièce intérieure. Ces stries pénètrent dans la matière des parois du profilé lors du serrage, et améliorent le blocage.

L'invention sera exposée plus en détail en s'aidant des figures, relatives à deux exemples non limitatifs, et parmi lesquelles :

Fig. 1 est une vue de côté et en demi-coupe d'un joint réalisé selon l'invention ;

Fig. 2 est une vue en bout et en demi-coupe du même joint ;

Fig. 3 est une coupe d'un profilé spécialement adapté à la mise en oeuvre du procédé;

Fig. 4 est une vue en perspective éclatée d'un autre mode de réalisation préféré de l'invention;

Fig. 5 est une coupe axiale du conformateur utilisé dans la réalisation de la figure 4.

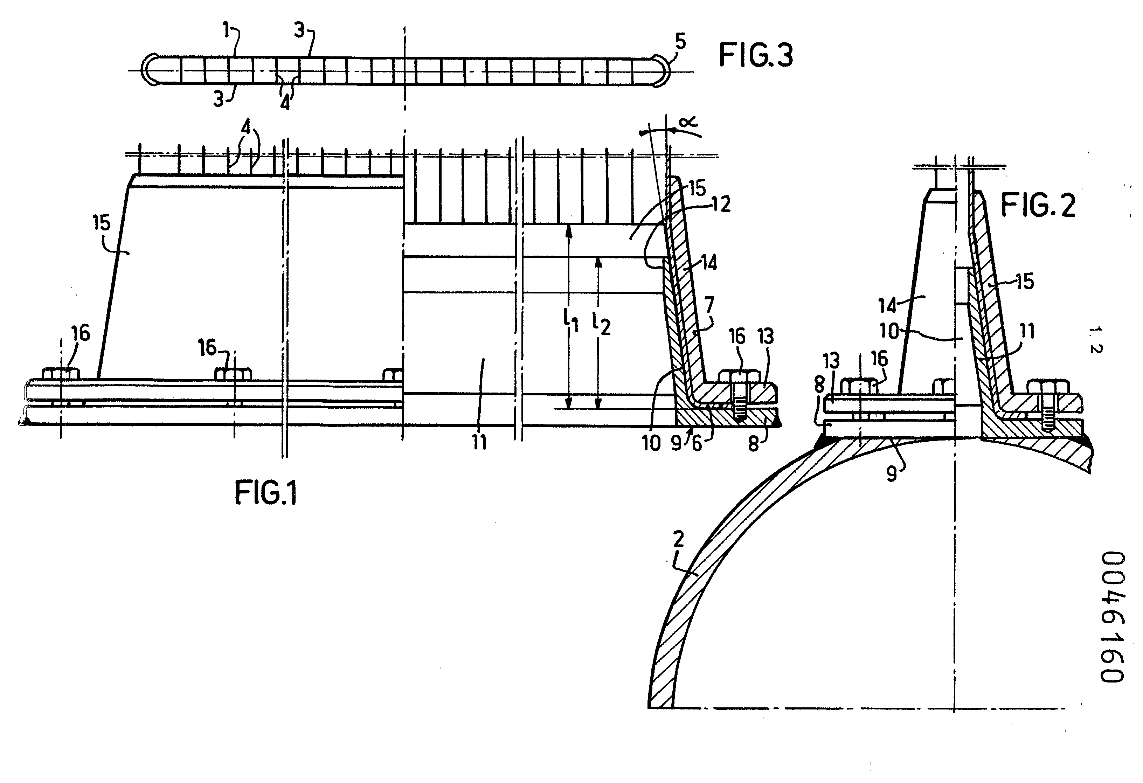

Le joint décrit aux figures 1 et 2 est destiné à raccorder une pièce multitubulaire 1 à un tube cylindrique 2. La pièce multitubulaire comprend deux parois planes 3 parallèles reliées entre elles par une série de cloisons planes 4. Les cloisons terminales 5 sont d'épaisseur plus grande et de forme demi-cylindrique. A titre d'exemple, les dimensions du profilé sont les suivantes : largeur: 200 mm, distance entre les parois: 5 mm, distance entre les cloisons: 5,5 mm, épaisseur des parois et des cloisons; 0,25 mm, épaisseur des cloisons terminales : 0,50 mm. Il est clair que ces indications n'ont qu'une valeur indicative ; on peut par exemple utiliser des profilés analogues, mais de largeur allant jusqu'à 2 mètres.

Le joint comprend une pièce interne 6 et une pièce externe 7.

La pièce interne a la forme générale d'un entonnoir à section rectangulaire.

Elle comprend une embase 8, de forme générale rectangulaire, évidée en rectangle au centre, et dont une face 9 est plane pour permettre sa fixation étanche, sur une surface plane préparée par exemple le long d'une génératrice du tube 2. Sur la face opposée de l'embase, et le long des côtés de l'évidement intérieur, quatre ailes obliques 10, 11 identiques deux à deux, s'écartent de l'embase, chacune se rapprochant de celle qui lui fait vis-à-vis. Les quatre ailes font corps avec l'embase et se raccordent les unes aux autres par des arrondis sur leurs bords pour former la structure en entonnoir rectangulaire évoquée plus haut. Dans sa partie la plus resserée, la section du passage entre les ailes est très sensiblement égale, en forme et en dimension, à la section de la pièce tubulaire 1. La face externe des ailes fait, avec l'axe de la pièce 6, un angle qui est d'environ 10° pour les ailes 10 situées sur les petits côtés, et de 5° pour les ailes 11. Ces valeurs dépendent évidemment des différents paramètres du procédé, et en particulier de la matière dont sont faites les différentes pièces, ici polychlorure de vinyle, ou mieux, polycarbonates pour la pièce multitubulaire, et polyméthacrylate pour les pièces interne et externe. La différence relevée entre les angles permet d'éviter des contraintes trop élevées sur les parois latérales de la pièce 1, tout en maintenant une tension suffisante sur ses parois principales.

Les ailes 10, 11 présentent, vers leur extrémité, un biseau 12, dont le rôle est de maintenir la section de passage à travers la pièce 6 tout en permettant son introduction dans la pièce 1.

La pièce externe 7 est d'une forme tout à fait analogue à la pièce interne 6, et il n'est pas nécessaire de la décrire aussi en détail. Son embase 13 est prévue pour venir en appui sur l'embase 9 de la pièce 6, et dans cette position la face intérieure de ses ailes 14, 15 s'adapte à la face extérieure des ailes 10, 11. Cette adaptation se fait en maintenant pincées entre les deux pièces les extrémités des parois 3 et 5 de la pièce multitubulaire 1 comme il sera expliqué plus loin. Des vis 16 sont prévues pour serrer les deux embases 9, 13 l'une contre l'autre.

Pour l'obtention du joint, on prépare, sur le tube 2, une surface plane allongée le long d'une génératrice, et de longueur et largeur au moins égales à celles de la face 9 de l'embase 8, et comportant un trou central de même forme et de section au moins égale à celle de l'évidement de l'embase 9. On assemble la pièce intérieure 6 sur le tuyau 2 par vissage, collage, soudage ou tout autre moyen approprié, avec éventuellement interposition d'un joint.

D'autre part, on prépare la pièce multitubulaire 1 en enlevant les cloisons 3 sur une longueur $l_1$ plus grande que la distance $l_2$ du sommet des ailes 10, 11 à la surface de la face de l'embase 8 opposée à la face 9. Ainsi, sur l'extrémité de la pièce 1, ne subsistent que les parois principales 3 et latérales 5, et l'extrémité du profil se présente comme une partie tubulaire à section rectangulaire sans cloisons intermédiaires.

On enfile ensuite la pièce extérieure 7 autour de la pièce 1, puis on introduit à l'intérieur de la pièce 1 un conformateur ayant extérieurement la forme géométrique de la pièce 6. Ce conformateur peut éventuellement être la pièce 6 elle-même, si elle est en matériau suffisamment résistant, et on déforme la pièce 1 en enfonçant le conformateur jusqu'à la profondeur prévue pour la pièce 6 dans le joint terminé. Cette déformation est faite à une température suffisante pour obtenir une déformation permanente (température de thermoformage).

On introduit ensuite la pièce 6, si elle n'a pas servi de conformateur, et on serre les pièces 6 et 7 l'une contre l'autre à l'aide des vis 16.

On obtient ainsi, malgré la grande simplicité des moyens mis en oeuvre, une étanchéité remarquable. Celle-ci peut être encore augmentée en prévoyant l'intercalation d'un joint, ou d'une substance adhésive et étanche, entre la pièce 1 et l'une des pièces 6 et 7, et/ou entre celles-ci.

Le procédé et le joint ainsi décrits sont susceptibles de plusieurs variantes. Par exemple, si la pièce 6 n'est pas évidée, on obtient une obturation étanche. Si on prévoit, sur la même pièce 6, une ou plusieurs cloisons séparatrices allant jusqu'au contact des cloisons 4 là où elles n'ont pas été arasées, on peut séparer le flot s'écoulant dans la pièce multitubulaire 1 en plusieurs écoulements distincts.

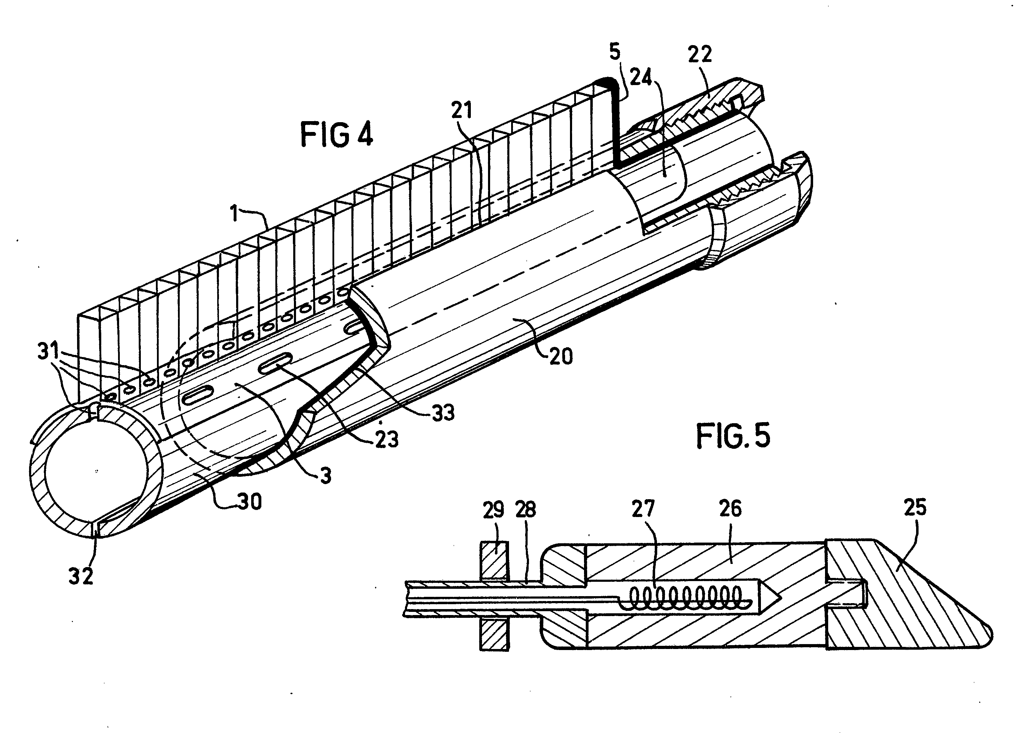

La figure 4 représente un autre type de joint obtenu conformément à l'invention.

Le profilé multitubulaire 1 est du type décrit plus haut, avec notamment des cloisons terminales 5 d'épaisseur plus grande et de forme demi-cylindrique.

La pièce externe est constituée cette fois par un tube 20 en matière plastique ayant une température de ramollissement supérieure à celle de la matière dont est fait le profilé 5. Ce tube, bien entendu, pourrait aussi être en métal. Dans ce tube on a pratiqué par fraisage une fente longitudinale 21 de longueur et de largeur sensiblement égales à la largeur et à l'épaisseur du profilé 1. Cette fente ne va pas jusqu'aux extrémités du tube 20, et celles-ci sont pourvues de moyens de raccordement ou d'obturation 22 du type classique, mis en place au préalable ou postérieurement. Après avoir préparé le profilé comme indiqué ci-dessus par enlevage des cloisons intérieures, on prépare dans les parois latérales 3 du profilé une série de trous 23 situés près de l'extrémité, à peu près a mi-distance entre celle-ci et la limite d'enlévement des cloisons. On introduit alors le profilé 1 dans la fente 21, le présentant légérement en biais, c'est à dire qu'on enfonce une des extrémités jusqu'à la profondeur finale prévue, l'autre extrémité du profilé restant en dehors du volume intérieur du tube. On enfile ensuite dans le tube 21 un conformateur chauffant, formé d'une pièce cylindrique à extrémités tronconiques, de diamètre égal au diamètre intérieur du tube diminué de l'épaisseur d'une paroi du profilé, ce conformateur étant à une température permettant le thermoformage de la matière du profilé. Le conformateur déforme les parois 3 du profilé en les appliquant contre la surface interne du tube 21 et, arrivant au niveau de l'extrémité 5, il étale celle-ci en une plage 24 de forme arrondie contre la surface interne du tube. On enfonce alors le tube 1 jusqu'à sa position finale et le conformateur en reculant donne aux parois leur forme définitive et épanouit l'autre extrémité en une plage arrondie symétrique de la plage 24. Si nécessaire, le conformateur peut faire plusieurs aller et retour.

La figure 5 donne une coupe du conformateur : celui-ci comprend une pièce de tête 25, en teflon, de forme cylindrique tronconique, la pointe du cône étant excentrée; un corps 26 en acier, cylindrique, poli, de diamètre très légérement inférieur à celui de la pièce de tête, à extrémité arrondie, et comportant une résistance électrique 27 intérieure, une tige de poussée 28 contenant les conducteurs d'alimentation électrique, et un anneau de guidage 29, dans lequel coulisse la tige de poussée et qui s'introduit dans le tube 20 mais reste à l'extérieur du profilé. Le conformateur peut aussi être du type à air chaud.

Après le passage du conformateur, on introduit le tube intérieur 30. Celui-ci est percé, sur une génératrice, d'une série de trous 31, prévus pour être coaxiaux avec les tubes définis par les cloisons du profilé 1, et sur une génératrice opposée, il comporte une fente longitudinale 32 qui s'étend sur toute sa longueur. Le tube 30 a été au préalable enduit d'une matière pâteuse et adhésive d'étanchéité 33, capable de durcir ensuite par séchage, chauffage ou polymérisation. On introduit à l'intérieur du tube 30 une chambre gonflable qu'on relie à une source de fluide sous pression de façon à déformer le tube 30 en augmentant son diamètre et en élargissant la fente 32 pendant le durcissement de la matière d'étanchéité 33. Cette matière, avant son durcissement, pénétre sous l'effet de la pression dans toutes les fentes ou interstices, et spécialement dans les trous 23 et assure ainsi un ancra- ge solide du profilé sur les tubes 20 et 30 et de ces tubes / entre eux près durcissement de la matière d'étanchéité,la chambre gonflable est dégonflée et retirée, et le dispositif est alors prêt à l'emploi.

Si l'on désire que les tubes du profilé multitubulaire ne communiquent entre eux que par l'intermédiaire du tube intérieur 30 et des trous 31, indépendamment de la longueur sur laquelle les cloisons 4 ont été arasées,à condition cependant que les cloisons arasées n'arrivent pas trops loin du joint, on peut garnir l'extrémité non arasée de ces tubes avec un bouchon de la même matière pâteuse et adhésive 33, avant la mise en place du joint. Ensuite, par l'action d'un envoi d'air comprimé dans le profilé, on débouche l'extrémité des canaux et les trous 31, en chassant la matière pâteuse sur les côtés. Cette manière simple d'opérer permet notamment, de préparer un circuit en épingle à cheveux, comme décrit plus loin, en plaçant simplement un disque obturateur à l'endroit convenable du tube 30.

L'obtention d'un joint étanche pour les pièces multitubulaires permet de multiplier les possibilités d'emploi de ces pièces, et de mettre à profit leurs qualités.

Il est ainsi possible de construire un échangeur formé d'une ou plusieurs de ces pièces, de grande longueur, enroulées en spirale, les trous étant maintenus écartés par des entretoises, les extrémités intérieures et extérieures de la spirale étant reliées chacune à un collecteur grâce à un joint réalisé selon l'invention. Un des fluides de l'échangeur circule dans la pièce multitubulaire en nappe mince,divisée en filets multiples par les cloisons, l'autre fluide circulant à flux croisés.Le gain en encombrement,en poids et en coût d'investissement peut, à performance égale, être de 80 % à 65 % par rapport à un échangeur de type courant.

Dans une variante, l'extrémité intérieure de la pièce multitubulaire en spirale est obturée par un collecteur non relié à l'extérieur ou un joint plein, selon l'invention, et l'autre par un joint comprenant une séparation centrale qui vient en contact avec une cloison intérieure de la pièce multitubulaire. Ce joint est relié d'un côté à un collecteur d'entrée et de l'autre côté à un collecteur de sortie. On obtient ainsi, au prix d'une légère complication, un dispositif en épingle à cheveux dont les deux collecteurs peuvent être isolés du fluide circulant autour de la ... pièce multitubulaire. Dans le cas du joint plein, les cloisons intérieures de l'extrémité correspondante doivent être supprimées sur une longueur telle que la section de passage entre les deux séries de tubes soit conservée. De préférence, cette longueur augmente des bords de la pièce vers son centre.

On notera que, dans les deux cas, la surépaisseur de la cloison terminale augmente la résistance de l'ensemble à l'usure ou à l'abrasion, ainsi que sa résistance mécanique. On notera aussi un autre avantage apporté par cette surépaisseur : dans un profilé multitubulaire, les canaux d'extrémités sont soumis à des contraintes plus fortes que les autres car la pression interne s'exerce sur 3 côtés, alors que sur les autres canaux, la pression interne ne s'exerce que sur deux faces opposées. L'existence d'une surépaisseur de la cloison terminale permet au profilé de supporter, sans autre modification, des pressions internes plus élevées.

Il est également possible de construire un capteur solaire, comportant une série de pièces multitubulaires disposées à plat, reliées par leurs extrémités à des collecteurs et parcourues par un fluide caloporteur, éventuellement teinté pour une meilleure absorption, ou bien dont les pièces multitubulaires, obtenues par co-extrusion, sont constituées avec une paroi transparente et l'autre opaque ou colorée. Si ces pièces comportent des nervures extérieures sur une de leurs faces, destinées à soutenir un couvercle transparent sous lequel on peut entretenir le vide ou une atmosphère contrôlée, il convient d'araser ces nervures en même temps que les cloisons internes , sur une longueur permettant la mise en place de la pièce extérieure 7, c'est-à-dire une longueur plus grande que la longueur $l_1$ pour tenir compte du fait que, pendant l'action du conformateur, la pièce n'est pas serrée.

On notera encore que le joint réalisé selon l'invention permet d'obtenir une excellente étanchéité aussi bien lorsqu'il est soumis à une surpression interne que lorsqu'il est soumis à une surpression externe. Dans ce dernier cas, où la pièce extrudée multitubulaire est elle même très résistante à l'écrasement résultant de la surpression, il est possible de réaliser des installations de filtration efficaces simplement en réalisant cette pièce multitubulaire en une matière présentant une perméabilité convenable. Dans ce cas, une des extrémités de la pièce multitubulaire est fermée par un joint étanche dont la pièce interne est pleine, l'autre extrémité de la pièce multitubulaire étant reliée à un collecteur d'aspiration par un joint ordinaire et le profilé est immergé sur au moins une partie de sa longueur à l'intérieur du fluide à filtrer. On peut également utiliser un dispositif analogue pour séparer deux liquides de densité différente, par exemple des hydrocarbures flottants sur l'eau. Dans ce cas, on met à profit le fait qu'il est facile de régler la densité du profilé soit par un choix convenable de la matière première, soit en maintenant remplis d'air certains des tubes de la pièce, qui sont reliés à une source d'air par un joint comportant une cloison séparatrice ou bien qui sont simplement obturés alors qu'ils sont pleins d'air. Dans ce cas, on peut amener le profilé à flotter sur la surface, et, avantageusement, il est perméable sur une seule face, étant obtenu par co-extrusion. Avantageusement aussi, on donne à la paroi perméable une souplesse suffisante pour que, par l'effet de l'aspiration, elle prenne une forme ondulée avec une concavité vers l'intérieur entre les cloisons 4, ce qui facilite la collecte du liquide à évacuer.

Des dispositifs analogues, perméables sur deux faces ou sur une seule peuvent également trouver un emploi dans le drainage des sols ou l'irrigation. Dans le cas où le profilé est placé horizontalement dans le sol et perméable sur une seule face, celle-ci est avantageusement dirigée vers la surface.

La grande largeur du profilé permet d'isoler ainsi une couche superficielle à humidité contrôlée.

Une autre application du procédé de l'invention réside dans la confection de silencieux d'échappement ou autres.

Le profilé est alors perméable, ayant des pores permettant la sortie et la division de l'écoulement gazeux, il peut être ouvert ou fermé en extrémité, et une atténuation des ondes de choc peut être obtenue en l'enroulant en spirale.

Lorsqu'on désire obtenir une étanchéité encore supérieure à ce qui a été décrit plus haut, ainsi qu'une résistance encore plus grande à l'arrachement et aux contraintes diverses, on peut opérer de la

0046160

façon suivante : on prévoit, sur la surface interne de la pièce extérieure qui est destinée à être en contact avec l'extrémité du profilé, une rainure transversale faisant le tour de la pièce et reliée à l'extérieur par des perçage, et, après la mise en place du profilé entre les pièces externes et internes et serrage au moins partiel, on injecte par les perçages, sous pression, de la matière plastique ayant une température de fusion voisine de celle de la matière du profilé et chauffé au moins à cette température.

On peut ensuite, si on le désire, compléter le serrage avant la solidification complète de la matière plastique, on obtient ainsi un joint d'une étanchéité et d'une tenue remarquable.

0046160

## REVENDICATIONS

1. Procédé d'obturation ou de raccordement d'un profilé multitubulaire comportant deux parois planes parallèles reliées par des cloisons longitudinales parallèles entre elles et délimitant avec les parois une série de tubes, à section carrée ou rectangulaire, ce procédé étant du type dans lequel l'étanchéité est obtenue en plaçant l'extrémité d'un tube déformable entre deux pièces rigides extérieure et intérieure, de formes conjuguées et en rapprochant ces deux pièces l'une de l'autre pour serrer l'extrémité du tube, caractérisé en ce qu'on utilise un profilé dont les cloisons terminales ont une épaisseur initiale supérieure à celle des parois et caculée pour qu'après les déformations correspondant à la mise en oeuvre du procédé, cette épaisseur soit à peu près égale à celle des parois.

2. Procédé selon la revendication 1 et dans lequel on évase l'extrémité du profilé avant le serrage par une déformation permanente caractérisé en ce que, par cette déformation permanente, on conforme le profilé à la surface extérieure de la pièce intérieure.

3. Procédé selon l'une des revendications 1 ou 2, caractérisé en ce que lesdites cloisons terminales ont la forme de demi-cylindres à concavité tournée vers l'intérieur.

4. Procédé selon l'une des revendaction 1 à 3, caractérisé en ce que, après avoir arasé les cloisons du profilé sur une certaine longueur à partir de l'extrémité en laissant substituer toutefois les cloisons extrêmes, on introduit ladite extrémité dans une pièce extérieure constituée d'un tube en la faisant passer dans une fentelongitudinale dudit tube, puis on introduit dans ledit tube une pièce intérieure cylindrique de section extérieure légérement inférieure à la section intérieure du tube, l'écart entre ces deux sections étant tel que les parois du profilé sont fortement serrées entre le tube et la pièce.

5. Procédé selon la revendication 4, caractérisé en ce que la pièce cylindrique est un tube comportant une série d'orifices situés à peu près sur une même génératrice, et en ce qu'on place ladite pièce avec les orifices dirigés vers l'intérieur du profilé multitubulaire.

6. Procédé selon l'une des revendications 4 à 5, caractérisé en ce que la pièce cylindrique est un tube fendu suivant une génératrice, et en ce qu'on place ladite pièce avec la fente dirigée à l'opposé du profilé multitubulaire.

7. Procédé selon l'une des revendications 1 à 3, caractérisé en ce que, apèrs avoir arasé les cloisons sur une certaine longueur à partir de l'extrémité, on introduit l'extrémité du profilé à l'intérieur d'une pièce extérieure comportant une embase et une partie centrale tubulaire à section allongée, dont la section diminue en s'écartant de l'embase jusqu'à être légérement supérieure à celle du profilé, et on introduit entre les parois du profilé une pièce intérieure.

8. Procédé selon l'une des revendications 4 à 7, caractérisé en ce qu'on place entre la pièce extérieure et la pièce intérieure, au moins de chaque côté de l'extrémité du profilé, une matière d'étanchéité durcissable et en ce qu'on déforme élastiquement la pièce intérieure pour la serrer contre la pièce extérieure ou vice-versa, pendant le durcissement de ladite matière d'étanchéité.

9. Procédé selon la revendication 8, caractérisé en ce qu'on pratique des trous dans la partie de la paroi du profilé qui est destinée à être serrée entre les pièces extérieure et intérieure, si bien que l'immobilisation du profilé est amélioré par pénétration de la matière d'étanchéité dans ces trous, de sorte que les deux pièces intérieur et extérieure sont de ce fait rendues solidaires.

10. Procédé selon l'une des revendications 1 à 9, caractérisé en ce qu'on prévoit des stries longitudinales sur la face interne de la pièce extérieure et/ou sur la face externe de la pièce intérieure.

11. Application du procédé selon l'une des revendications 1 à 10 à la construction d'un échangeur, caractérisée en ce que on raccorde chacune des deux extrémités d'un profilé multitubulaire enroulé en spirale à un collecteur d'entrée ou de sortie, si bien qu'un fluide peut circuler dans ledit profilé alors qu'un autre fluide circule autour de lui.

12. Application du procédé selon l'une des revendications 1 à 10, à la construction d'un échangeur, caractérisée en ce qu'on place, selon le procédé de l'invention, un collecteur non relié à l'extérieur ou un joint plein pour obturer l'extrémité intérieure d'un profilé multitubulaire enroulé en spirale, et en ce qu'on place à l'autre extrémité un raccordement comportant une cloison centrale venant en contact avec une cloison du profilé et relié d'un côté à un collecteur d'entrée et de l'autre à un collecteur de sortie.

FIG.1

FIG.2

FIG.3

FIG 4

FIG.5

Office européen
des brevets

**RAPPORT DE RECHERCHE EUROPEENNE**

0046160

Numéro de la demande

EP 80 40 1199

| Catégorie | Citation du document avec indication, en cas de besoin, des parties pertinentes | Revendication concernée |
|---|---|---|
| | **DOCUMENTS CONSIDERES COMME PERTINENTS** | |
| E | FR - A - 2 448 094 (TOUPIN) <br> * Brevet entier * <br> -- | 1-3,7, 11,12 |
| A | FR - A - 2 136 360 (MANNESMANN) <br> * Page 1, lignes 15-36 * <br> -- | 1 |
| A | FR - A - 2 229 032 (PONT-A-MOUSSON) <br> * Revendications * <br> -- | 1 |
| A | US - A - 3 859 980 (CRAWFORD) <br> * Colonne 1, ligne 6 - colonne 2, ligne 38 * <br> -- | 1 |
| A | US - A - 4 114 597 (ERB) <br> * Colonne 6, ligne 7 - colonne 7, ligne 18; colonne 9, ligne 62 - colonne 11, ligne 7 * <br> -- | 1 |
| A | GB - A - 1 555 485 (DOBSON) <br> * Page 3, lignes 15-71 * <br> -- | 1 |
| A | CH - A - 416 236 (FISCHER) <br> * Figures 1 et 2 * <br> -- | 1 |
| A | US - A - 4 213 498 (VANDENBOSSCHE) <br> * Figure 1 * <br> -- ./. | 1 |

**CLASSEMENT DE LA DEMANDE (Int. Cl.³)**

F 16 L 47/00
F 28 F 9/06
F 24 J 3/02
F 16 L 47/02

**DOMAINES TECHNIQUES RECHERCHES (Int. Cl.³)**

F 16 L
F 28 F
F 24 J

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 29-05-1981 | ATKINS |

OEB Form 1503.1  06.78

Office européen
des brevets

**RAPPORT DE RECHERCHE EUROPEENNE**

0046160

Numéro de la demande

EP 80 40 1199

2

| | **DOCUMENTS CONSIDERES COMME PERTINENTS** | | **CLASSEMENT DE LA DEMANDE (Int. Cl. 3)** |
|---|---|---|---|
| Catégorie | Citation du document avec indication, en cas de besoin, des parties pertinentes | Revendication concernée | |
| A | DE - A - 2 739 373 (TREADUAC) <br> * Figure 4 * <br> & FR - A - 2 363 764 <br><br> ---- | 1 | |
| | | | **DOMAINES TECHNIQUES RECHERCHES (Int. Cl. 3)** |